# EUROPEAN PATENT APPLICATION

(11) **EP 4 668 980 A1**
(43) Date of publication of application: **24.12.2025**
(21) Application number: 24756214.3
(22) Date of filing: 07.02.2024
(51) Int. Cl.: H04W 72/232

(54) **METHOD AND APPARATUS USED IN NODE FOR WIRELESS COMMUNICATION**

(30) Priority: 16.02.2023 CN 202310126179; 17.02.2023 CN 202310134862
(71) Applicant: Apogee Networks, LLC, Dallas, TX 75201 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2024/076575
(87) International publication number: WO 2024/169841

(57) **Abstract**

Disclosed in the present application are a method and apparatus used in a node for wireless communication. The method comprises: a first receiver receiving first DCI, wherein the first DCI is used for triggering a target physical uplink channel, and the first DCI is associated with a first coresetPoolIndex value; and a first transmitter sending a first PUSCH, wherein the first PUSCH is associated with a second coresetPoolIndex value, and the first PUSCH overlaps with the target physical uplink channel; and whether the first coresetPoolIndex value can be different from the second coresetPoolIndex value is related to whether the target physical uplink channel is a PUCCH or a PUSCH.

## Description

### Technical Field

The present application relates to a transmission method and apparatus in a wireless communication system, in particular to a transmission method and apparatus for wireless signals in a wireless communication system supporting a cellular network.

### Background Art

For an uplink, enhancing the relationship between a PUSCH and a PUCCH/PUSCH that overlap with each other is an effective means to realize system optimization.

### Summary of the Invention

For scenarios related to the overlap between a PUSCH and a PUCCH/PUSCH, how to reduce complexity of system design/improve scheduling flexibility is an important problem that needs to be considered in system design. In view of the above problem, the present application discloses a solution. The present application can be applied to a variety of wireless communication scenarios, such as single-TRP (Transmit/Receive Point) transmission, multi-TRP transmission, single-panel transmission, multi-panel transmission, etc., and achieves similar technical effects. In addition, the use of a unified solution for different scenarios (including but not limited to the single-TRP transmission, the multi-TRP transmission, the single-panel transmission, and the multi-panel transmission) also facilitates the reduction of hardware complexity and costs or the improvement of performance. In the absence of conflicts, the embodiments and features in the embodiments in any node of the present application can be applied to any other node. In the absence of conflicts, the embodiments and features in the embodiments of the present application can be arbitrarily combined with each other.

As one embodiment, the interpretation of the terminologies in the present application is made with reference to the definition of the 3GPP standard protocol TS36 series.

As one embodiment, the interpretation of the terminologies in the present application is made with reference to the definition of the 3GPP standard protocol TS38 series.

As one embodiment, the interpretation of the terminologies in the present application is made with reference to the definition of the 3GPP standard protocol TS37 series.

As one embodiment, the interpretation of the terminologies in the present application is made with reference to the definition of the IEEE (Institute of Electrical and Electronics Engineers) standard protocol.

The present application discloses a method used in a first node for wireless communication, characterized by comprising:
receiving first DCI, wherein the first DCI is used for triggering a target physical uplink channel, and the first DCI is associated with a first coresetPoolIndex value; and
sending a first PUSCH, wherein the first PUSCH is associated with a second coresetPoolIndex value, and the first PUSCH overlaps with the target physical uplink channel;
wherein whether the first coresetPoolIndex value can be different from the second coresetPoolIndex value is related to whether the target physical uplink channel is a PUCCH or a PUSCH.

As one embodiment, the benefits of the above method comprise: effectively reducing complexity of system design, or improving scheduling flexibility.

As one embodiment, the benefits of the above method comprise: effectively taking into account both complexity of system design and scheduling flexibility.

As one embodiment, the benefits of the above method comprise: improving uplink transmission efficiency.

As one embodiment, the benefits of the above-mentioned method comprise: shortening the transmission delay.

As one embodiment, the benefits of the above method comprise: small changes to the existing 3GPP standard, and small workloads required for standardization.

According to one aspect of the present application, the above method is characterized in that,
when the target physical uplink channel is the PUCCH, the first coresetPoolIndex value cannot be different from the second coresetPoolIndex value.

As one embodiment, the benefits of the above method comprise: effectively reducing complexity of system design.

As one embodiment, the benefits of the above method comprise: small workloads required for standardization.

According to one aspect of the present application, the above method is characterized in that,
when the target physical uplink channel is the PUCCH and the target physical uplink channel is reserved for UCI comprising HARQ-ACK information, the first coresetPoolIndex value cannot be different from the second coresetPoolIndex value.

As one embodiment, the benefits of the above method comprise: effectively reducing complexity of system design.

As one embodiment, the benefits of the above method comprise: small workloads required for standardization.

According to one aspect of the present application, the above method is characterized in that,
when the target physical uplink channel is the PUSCH, the first coresetPoolIndex value can be different from the second coresetPoolIndex value.

As one embodiment, the benefits of the above-mentioned method comprise: increased flexibility.

As one embodiment, the benefits of the above method comprise: facilitating the improvement of transmission efficiency.

As one embodiment, the benefits of the above-mentioned method comprise: shortening the transmission delay.

According to one aspect of the present application, the above method is characterized in that,
when the target physical uplink channel is the PUSCH, the first node sends the target physical uplink channel.

As one embodiment, the benefits of the above method comprise: facilitating the improvement of transmission efficiency.

As one embodiment, the benefits of the above-mentioned method comprise: shortening the transmission delay.

According to one aspect of the present application, the above method is characterized in that,
when the target physical uplink channel is the PUCCH, the first node does not send the target physical uplink channel.

According to one aspect of the present application, the above method is characterized in that,
HARQ-ACK information is multiplexed on the first PUSCH.

The present application discloses a method used in a second node for wireless communication, characterized by comprising:
sending first DCI, wherein the first DCI is used for triggering a target physical uplink channel, and the first DCI is associated with a first coresetPoolIndex value; and
receiving a first PUSCH, wherein the first PUSCH is associated with a second coresetPoolIndex value, and the first PUSCH overlaps with the target physical uplink channel;
wherein whether the first coresetPoolIndex value can be different from the second coresetPoolIndex value is related to whether the target physical uplink channel is a PUCCH or a PUSCH.

According to one aspect of the present application, the above method is characterized in that,
when the target physical uplink channel is the PUCCH, the first coresetPoolIndex value cannot be different from the second coresetPoolIndex value.

According to one aspect of the present application, the above method is characterized in that,
when the target physical uplink channel is the PUCCH and the target physical uplink channel is reserved for UCI comprising HARQ-ACK information, the first coresetPoolIndex value cannot be different from the second coresetPoolIndex value.

According to one aspect of the present application, the above method is characterized in that,
when the target physical uplink channel is the PUSCH, the first coresetPoolIndex value can be different from the second coresetPoolIndex value.

According to one aspect of the present application, the above method is characterized in that,
when the target physical uplink channel is the PUSCH, the second node receives the target physical uplink channel.

According to one aspect of the present application, the above method is characterized in that,
when the target physical uplink channel is the PUCCH, the second node abandons receiving the target physical uplink channel.

According to one aspect of the present application, the above method is characterized in that,
HARQ-ACK information is multiplexed on the first PUSCH.

The present application discloses a first node used for wireless communication, characterized by comprising:
a first receiver receiving first DCI, wherein the first DCI is used for triggering a target physical uplink channel, and the first DCI is associated with a first coresetPoolIndex value; and
a first transmitter sending a first PUSCH, wherein the first PUSCH is associated with a second coresetPoolIndex value, and the first PUSCH overlaps with the target physical uplink channel;
wherein whether the first coresetPoolIndex value can be different from the second coresetPoolIndex value is related to whether the target physical uplink channel is a PUCCH or a PUSCH.

The present application discloses a second node used for wireless communication, characterized by comprising:
a second transmitter sending first DCI, wherein the first DCI is used for triggering a target physical uplink channel, and the first DCI is associated with a first coresetPoolIndex value; and
a second receiver receiving a first PUSCH, wherein the first PUSCH is associated with a second coresetPoolIndex value, and the first PUSCH overlaps with the target physical uplink channel;
wherein whether the first coresetPoolIndex value can be different from the second coresetPoolIndex value is related to whether the target physical uplink channel is a PUCCH or a PUSCH.

### Brief Description of the Drawings

By reading the detailed description of the non-limiting embodiments in the following drawings, other features, purposes and advantages of the present application will become more obvious.
FIG. 1 shows a processing flowchart of a first node according to one embodiment of the present application;
FIG. 2 shows a schematic diagram of a network architecture according to one embodiment of the present application;
FIG. 3 shows a schematic diagram of a radio protocol architecture for a user plane and a control plane according to one embodiment of the present application;
FIG. 4 shows a schematic diagram of a first communication device and a second communication device according to one embodiment of the present application;
FIG. 5 shows a flowchart of signal transmission according to one embodiment of the present application;
FIG. 6 shows a schematic diagram illustrating that a first coresetPoolIndex value cannot be different from a second coresetPoolIndex value according to one embodiment of the present application;
FIG. 7 shows a schematic diagram illustrating that a first coresetPoolIndex value cannot be different from a second coresetPoolIndex value according to one embodiment of the present application;
FIG. 8 shows a schematic diagram illustrating that a first coresetPoolIndex value can be different from a second coresetPoolIndex value according to one embodiment of the present application;
FIG. 9 shows a structural block diagram of a processing apparatus in a first node device according to one embodiment of the present application; and
FIG. 10 shows a structural block diagram of a processing apparatus in a second node device according to one embodiment of the present application.

### Detailed Description of Embodiments

The technical solution of the present application will be further described in detail below in conjunction with the accompanying drawings. It should be noted that in the absence of conflicts, the embodiments and features in the embodiments of the present application can be arbitrarily combined with each other.

### Embodiment 1

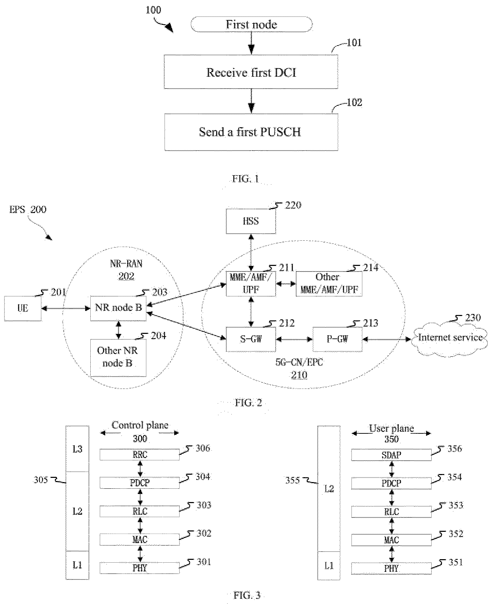

Embodiment 1 illustrates a processing flowchart of a first node according to one embodiment of the present application, as shown in FIG. 1.

In Embodiment 1, the first node in the present application receives first DCI in step 101; and sends a first PUSCH in step 102.

In Embodiment 1, the first DCI is used for triggering a target physical uplink channel, and the first DCI is associated with the first coresetPoolIndex value; the first PUSCH is associated with a second coresetPoolIndex value, and the first PUSCH overlaps with the target physical uplink channel, whether the first coresetPoolIndex value can be different from the second coresetPoolIndex value is related to whether the target physical uplink channel is a PUCCH or a PUSCH.

As one embodiment, the first DCI is one DCI (Downlink Control Information) format.

As one embodiment, the first DCI is detected in a PDCCH (Physical Downlink Control Channel).

As one embodiment, the first DCI comprises at least one field in one DCI format.

As one embodiment, the meaning of the statement "the first DCI is used for triggering a target physical uplink channel" comprises: the first DCI is used for indicating a time-frequency resource allocated to the target physical uplink channel.

As one embodiment, the meaning of the statement "the first DCI is used for triggering a target physical uplink channel" comprises: the first DCI is used for indicating a slot in which the target physical uplink channel is located.

As one embodiment, the statement "the first DCI is used for triggering a target physical uplink channel" means: the first DCI is used for indicating a time-frequency resource allocated to the target physical uplink channel.

As one embodiment, the statement "the first DCI is used for triggering a target physical uplink channel" means: the first DCI is used for indicating a slot in which the target physical uplink channel is located.

As one embodiment, the statement "the first DCI is used for triggering a target physical uplink channel" means: the first DCI is used for triggering/scheduling the target physical uplink channel.

As one embodiment, when the target physical uplink channel is a PUSCH, the first DCI is used for scheduling the target physical uplink channel.

As one embodiment, when the target physical uplink channel is a PUSCH, the first DCI is used for scheduling/activating the target physical uplink channel.

As one embodiment, when the target physical uplink channel is a PUCCH, the first DCI is used for triggering the target physical uplink channel.

As one embodiment, the statement "the first DCI is associated with a first coresetPoolIndex value" and "the target physical uplink channel is associated with a first coresetPoolIndex value" are equivalent to or interchangeable with each other.

As one embodiment, the statement "the first DCI is associated with a first coresetPoolIndex value" means: the first coresetPoollndex value is a value of a coresetPoollndex configured to a CORESET used for receiving the first DCI.

As one embodiment, the statement "the first DCI is associated with a first coresetPoolIndex value" means: the first coresetPoolIndex value is a value of a coresetPoolIndex in a ControlResourceSet configured for searching the first DCI.

As one embodiment, the statement "the first DCI is associated with a first coresetPoolIndex value" means: the first DCI is associated with a CORESET having the first coresetPoolIndex value.

As one embodiment, the statement "the first DCI is associated with a first coresetPoolIndex value" means: a PDCCH used for receiving the first DCI is associated with a ControlResourceSet having the first coresetPoolIndex value.

As one embodiment, sending the first PUSCH (Physical Uplink Shared Channel) means: sending at least one of a transport block or a CSI (Channel State Information) report on the first PUSCH.

As one embodiment, sending the first PUSCH means: sending a signal on the first PUSCH.

As one embodiment, the meaning of sending the first PUSCH comprises: sending at least one of a transport block or a CSI report on the first PUSCH.

As one embodiment, the meaning of sending the first PUSCH comprises: sending a signal on the first PUSCH, the signal sent comprising one bit block undergoing at least channel coding, scrambling, modulation, layer mapping, precoding, mapping to a virtual resource block, and output after mapping from the virtual resource block to a physical resource block.

As one embodiment, the meaning of sending the first PUSCH comprises: sending uplink information, the first PUSCH being used for bearing the uplink information.

As one embodiment, the first PUSCH is triggered by one DCI format.

As one embodiment, the first PUSCH is scheduled by one DCI format.

As one embodiment, the first PUSCH is activated by one DCI format.

As one embodiment, the statement "the first PUSCH is associated with a second coresetPoolIndex value" means: the second coresetPoolIndex value is a value of a coresetPoolIndex configured to a CORESET (Control Resource Set) used for receiving DCI that schedules the first PUSCH.

As one embodiment, the statement "the first PUSCH is associated with a second coresetPoolIndex value" means: the second coresetPoolIndex value is a value of a coresetPoolIndex in a ControlResourceSet configured for searching DCI that schedules the first PUSCH.

As one embodiment, the statement "the first PUSCH is associated with a second coresetPoolIndex value" means: DCI scheduling the first PUSCH is associated with a CORESET having the second coresetPoolIndex value.

As one embodiment, the statement "the first PUSCH is associated with a second coresetPoolIndex value" means: a PDCCH used for receiving DCI that schedules the first PUSCH is associated with a ControlResourceSet having the second coresetPoolIndex value.

As one embodiment, the statement "the first PUSCH is associated with a second coresetPoolIndex value" means: the second coresetPoolIndex value is a value of a coresetPoolIndex configured to a CORESET (Control Resource Set) used for receiving DCI that triggers the first PUSCH.

As one embodiment, the statement "the first PUSCH is associated with a second coresetPoolIndex value" means: the second coresetPoolIndex value is a value of a coresetPoolIndex in a ControlResourceSet configured for searching DCI that triggers the first PUSCH.

As one embodiment, the statement "the first PUSCH is associated with a second coresetPoolIndex value" means: the DCI triggering the first PUSCH is associated with a CORESET having the second coresetPoolIndex value.

As one embodiment, the statement "the first PUSCH is associated with a second coresetPoolIndex value" means: a PDCCH used for receiving DCI that triggers the first PUSCH is associated with a ControlResourceSet having the second coresetPoolIndex value.

As one embodiment, the first PUSCH and the target physical uplink channel are on the same serving cell.

As one embodiment, the first PUSCH and the target physical uplink channel are both on a primary cell (PCell).

As one embodiment, the first PUSCH and the target physical uplink channel are on different serving cells, respectively.

As one embodiment, the first coresetPoolIndex value is the value of the coresetPoolIndex.

As one embodiment, the second coresetPoolIndex value is the value of the coresetPoolIndex.

As one embodiment, the coresetPoolIndex is a parameter indicating an index of a CORESET (Control Resource Set) pool.

As one embodiment, the coresetPoolIndex is an RRC layer parameter.

As one embodiment, one coresetPoolIndex value is an index of a CORESET pool.

As one embodiment, one coresetPoolIndex value is one of 0 or 1.

As one embodiment, the statement "the first PUSCH overlaps with the target physical uplink channel" means: the first PUSCH overlaps with the target physical uplink channel in a time domain.

As one embodiment, the statement "the first PUSCH overlaps with the target physical uplink channel" means: a time domain resource occupied by the first PUSCH overlaps with a time domain resource allocated to the target physical uplink channel.

As one embodiment, the target physical uplink channel is one of the PUCCH (Physical Uplink Control Channel) or the PUSCH.

As one embodiment, the statement "whether the first coresetPoolIndex value can be different from the second coresetPoolIndex value is related to whether the target physical uplink channel is a PUCCH or a PUSCH" means:
when the target physical uplink channel is the PUCCH, the first coresetPoolIndex value cannot be different from the second coresetPoolIndex value; and when the target physical uplink channel is the PUSCH, the first coresetPoolIndex value can be different from the second coresetPoolIndex value.

As one embodiment, the statements "whether the first coresetPoolIndex value can be different from the second coresetPoolIndex value is related to whether the target physical uplink channel is a PUCCH or a PUSCH" and "whether the first coresetPoolIndex value is different from the second coresetPoolIndex value is related to whether the target physical uplink channel is a PUCCH or a PUSCH" are equivalent or interchangeable.

As one embodiment, the statement "whether the first coresetPoolIndex value can be different from the second coresetPoolIndex value is related to whether the target physical uplink channel is a PUCCH or a PUSCH" means: whether the first coresetPoolIndex value is different from the second coresetPoolIndex value or is not expected to be different from the second coresetPoolIndex value is related to whether the target physical uplink channel is a PUCCH or a PUSCH.

As one embodiment, the statement "whether the first coresetPoolIndex value can be different from the second coresetPoolIndex value is related to whether the target physical uplink channel is a PUCCH or a PUSCH" means: whether the first coresetPoolIndex value is different from the second coresetPoolIndex value or cannot be different from the second coresetPoolIndex value is related to whether the target physical uplink channel is a PUCCH or a PUSCH.

As one embodiment, the statement "whether the first coresetPoolIndex value can be different from the second coresetPoolIndex value is related to whether the target physical uplink channel is a PUCCH or a PUSCH" means:
when the target physical uplink channel is the PUCCH, the first node does not expect that the first coresetPoolIndex value is different from the second coresetPoolIndex value; and when the target physical uplink channel is the PUSCH, the first coresetPoolIndex value is different from the second coresetPoolIndex value.

As one embodiment, when the target physical uplink channel is the PUCCH, the first coresetPoolIndex value can be different from the second coresetPoolIndex value; and when the target physical uplink channel is the PUSCH, the first coresetPoolIndex value cannot be different from the second coresetPoolIndex value.

As one embodiment, the statement "whether the first coresetPoolIndex value can be different from the second coresetPoolIndex value is related to whether the target physical uplink channel is a PUCCH or a PUSCH" means:
when the target physical uplink channel is the PUCCH and the target physical uplink channel is reserved for UCI comprising HARQ-ACK information, the first coresetPoolIndex value cannot be different from the second coresetPoolIndex value; and when the target physical uplink channel is the PUSCH, the first coresetPoolIndex value can be different from the second coresetPoolIndex value.

As one embodiment, the target physical uplink channel is the PUCCH and the first coresetPoolIndex value cannot be different from the second coresetPoolIndex value, or the target physical uplink channel is the PUSCH and the first coresetPoolIndex value can be different from the second coresetPoolIndex value.

As one embodiment, the target physical uplink channel is the PUCCH, the target physical uplink channel is reserved for UCI comprising HARQ-ACK information, and the first coresetPoolIndex value cannot be different from the second coresetPoolIndex value, or the target physical uplink channel is the PUSCH and the first coresetPoolIndex value can be different from the second coresetPoolIndex value.

As one embodiment, ackNackFeedbackMode is configured as separate.

As one embodiment, ackNackFeedbackMode is configured as joint.

As one embodiment, ackNackFeedbackMode is not configured.

As one embodiment, the ackNackFeedbackMode is a higher layer parameter.

As one embodiment, the ackNackFeedbackMode is an RRC layer parameter.

As one embodiment, the first node receives a first parameter; Based on the configuration of the first parameter, the case where 2 PUSCHs associated with different coresetPoolIndex values on the same serving cell are simultaneously sent is permitted.

As one embodiment, the first parameter is a parameter for the same serving cell.

As one embodiment, the first parameter is an RRC layer parameter.

As one embodiment, the first parameter is one parameter in one information element (IE).

As one embodiment, a name of the first parameter comprises STxMP.

As one embodiment, a name of the first parameter comprises multi-DCI.

As one embodiment, the first node is configured with a higher layer parameter PDCCH-Config for an active BWP (Bandwidth Part) of one serving cell, and the higher layer parameter PDCCH-Config comprises 2 different coresetPoolIndex values in a ControlResourceSet.

As one embodiment, the first node is configured or not configured with a higher layer parameter PDCCH-Config for an active BWP of one serving cell, and the higher layer parameter PDCCH-Config comprises 2 different coresetPoolIndex values in a ControlResourceSet.

As one embodiment, when the target physical uplink channel is the PUSCH, the first node sends the target physical uplink channel.

As one embodiment, when the target physical uplink channel is the PUCCH, the first node does not send the target physical uplink channel.

As one sub-embodiment of the above embodiment, UCI is multiplexed to the first PUSCH.

As one embodiment, when the target physical uplink channel is a PUCCH reserved for UCI comprising HARQ-ACK information, the first node does not send the target physical uplink channel.

As one embodiment, HARQ-ACK information is multiplexed on the first PUSCH.

As one embodiment, no UCI is multiplexed on the first PUSCH.

As one embodiment, when the target physical uplink channel is the PUCCH and the target physical uplink channel does not overlap with any PUSCH other than the first PUSCH in a time domain, the first coresetPoolIndex value cannot be different from the second coresetPoolIndex value.

As one embodiment, when the target physical uplink channel is the PUCCH and the target physical uplink channel does not overlap with any PUSCH other than the first PUSCH and any other PUCCH in a time domain, the first coresetPoolIndex value cannot be different from the second coresetPoolIndex value.

As one embodiment, when the target physical uplink channel is the PUCCH and the target physical uplink channel overlaps with one PUSCH other than the first PUSCH that is associated with the first coresetPoolIndex value in a time domain, the first coresetPoolIndex value can be different from the second coresetPoolIndex value.

As one embodiment, when the target physical uplink channel is the PUCCH and the target physical uplink channel does not overlap with any PUSCH other than the first PUSCH that is associated with the first coresetPoolIndex value in a time domain, the first coresetPoolIndex value cannot be different from the second coresetPoolIndex value.

As one embodiment, when the target physical uplink channel is the PUCCH and the target physical uplink channel does not overlap with any other PUCCH and any PUSCH other than the first PUSCH that is associated with the first coresetPoolIndex value in a time domain, the first coresetPoolIndex value cannot be different from the second coresetPoolIndex value.

As one embodiment, when the target physical uplink channel is the PUCCH and the target physical uplink channel does not overlap with any other PUCCH associated with the first coresetPoolIndex value and any PUSCH other than the first PUSCH that is associated with the first coresetPoolIndex value in a time domain, the first coresetPoolIndex value cannot be different from the second coresetPoolIndex value.

As one embodiment, the other PUCCH is a PUCCH other than the target physical uplink channel.

As one embodiment, "one PUSCH is associated with the first coresetPoolIndex value" means: the first coresetPoolIndex value is a value of a coresetPoolIndex configured to a CORESET (Control Resource Set) used for receiving DCI that schedules this PUSCH.

As one embodiment, "one PUSCH is associated with the first coresetPoolIndex value" means: the first coresetPoolIndex value is a value of a coresetPoolIndex in a ControlResourceSet configured for searching DCI that schedules this PUSCH.

As one embodiment, "one PUSCH is associated with the first coresetPoolIndex value" means: DCI scheduling this PUSCH is associated with a CORESET having the first coresetPoolIndex value.

As one embodiment, "one PUSCH is associated with the first coresetPoolIndex value" means: a PDCCH used for receiving DCI that schedules this PUSCH is associated with a ControlResourceSet having the first coresetPoolIndex value.

As one embodiment, "one PUSCH is associated with the first coresetPoolIndex value" means: the first coresetPoolIndex value is a value of a coresetPoolIndex configured to a CORESET (Control Resource Set) used for receiving DCI that triggers this PUSCH.

As one embodiment, "one PUSCH is associated with the first coresetPoolIndex value" means: the first coresetPoolIndex value is a value of a coresetPoolIndex in a ControlResourceSet configured for searching DCI that triggers this PUSCH.

As one embodiment, "one PUSCH is associated with the first coresetPoolIndex value" means: DCI triggering this PUSCH is associated with a CORESET having the first coresetPoolIndex value.

As one embodiment, "one PUSCH is associated with the first coresetPoolIndex value" means: a PDCCH used for receiving DCI that triggers this PUSCH is associated with a ControlResourceSet having the first coresetPoolIndex value.

As one embodiment, "one PUCCH is associated with the first coresetPoolIndex value" means: this PUCCH is configured with the first coresetPoolIndex value.

As one embodiment, "one PUCCH is associated with the first coresetPoolIndex value" means: the first coresetPoolIndex value is a value of a coresetPoolIndex configured to a CORESET used for receiving DCI that triggers this PUCCH.

As one embodiment, "one PUCCH is associated with the first coresetPoolIndex value" means: the first coresetPoolIndex value is a value of a coresetPoolIndex in a ControlResourceSet configured for searching DCI that triggers this PUCCH.

As one embodiment, "one PUCCH is associated with the first coresetPoolIndex value" means: DCI triggering this PUCCH is associated with a CORESET having the first coresetPoolIndex value.

As one embodiment, "one PUCCH is associated with the first coresetPoolIndex value" means: a PDCCH used for receiving DCI that triggers this PUCCH is associated with a ControlResourceSet having the first coresetPoolIndex value.

### Embodiment 2

Embodiment 2 illustrates a schematic diagram of one network architecture according to the present application, as shown in FIG. 2.

FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terminologies. The EPS 200 may comprise one or more pieces of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet switching services, but those skilled in the art will readily appreciate that various concepts presented throughout the present application may be extended to a network providing a circuit switching service or other cellular networks. The NG-RAN comprises an NR Node B (gNB) 203 and other gNB204. The gNB203 provides user and control plane protocol termination toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (Transmit/Receive Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, a drone, an aircraft, a narrowband Internet of Things device, a machine type communication device, a land vehicle, an automobile, a wearable device, or any other similarly functional apparatuses. Those skilled in the art may also call the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 via an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted by the S-GW212, and the S-GW212 itself is connected to the P-GW213. The P-GW213 provides UE IP address allocation and other functions. The P-GW213 is connected to the Internet service 230. The Internet service 230 comprises an Internet protocol service corresponding to an operator, and may specifically comprise Internet, intranet, IMS (IP Multimedia Subsystem), and packet switching streaming services.

As one embodiment, the UE201 corresponds to the first node in the present application.

As one embodiment, the UE201 corresponds to the second node in the present application.

As one embodiment, the UE201 is UE.

As one embodiment, the gNB203 corresponds to the first node in the present application.

As one embodiment, the gNB203 corresponds to the second node in the present application.

As one embodiment, the UE201 corresponds to the first node in the present application, and the gNB203 corresponds to the second node in the present application.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is a base station device supporting a large-latency difference.

As one embodiment, the gNB203 is one flying platform device.

As one embodiment, the gNB203 is a satellite device.

### Embodiment 3

Embodiment 3 shows a schematic diagram of an embodiment of a radio protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 between a first communication node device (UE, gNB, or RSU in V2X) and a second communication node device (gNB, UE, or RSU in V2X), or between two pieces of UE, using three layers: Layer 1, Layer 2, and Layer 3. The Layer 1 (L1 layer) is the lowest layer and implements various PHY (Physical Layer) signal processing functions. The L1 layer will be referred to herein as a PHY301. The layer 2 (L2 layer) 305 is above the PHY301 and is responsible for links between the first communication node device and the second communication node device and between two pieces of UE by the PHY301. The L2 layer 305 comprises an MAC (Medium Access Control) sublayer 302, an RLC (Radio Link Control) sublayer 303, and a PDCP (Packet Data Convergence Protocol) sublayer 304, and these sublayers terminate at the second communication node device. The PDCP sublayer 304 provides multiplexing between different radio bearer and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. The RRC (Radio Resource Control) sublayer 306 in the Layer 3 (L3 layer) in the control plane 300 is responsible for obtaining radio resources (i.e., radio bearers) and configuring the lower layers using an RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 for the physical layer 351, the PDCP sublayer 354 in the L2 layer 355, the RLC sublayer 353 in the L2 layer 355, and the MAC sublayer 352 in the L2 layer 355 is substantially the same as that in the control plane 300 for the corresponding layers and sub-layers, but the PDCP sublayer 354 also provides header compression for upper layer data packets to reduce radio transmission overhead. The L2 layer 355 in the user plane 350 further comprises an SDAP (Service Data Adaptation Protocol) sublayer 356, and the SDAP sublayer 356 is responsible for mapping between QoS streams and data radio bearers (DRBs) to support the diversity of services. Although not shown in figures, the first communication node device may have several upper layers above the L2 layer 355, comprising a network layer (e.g., an IP layer) terminating at the P-GW on the network side and an application layer terminating at the other end (e.g., a remote UE, a server, etc.) of the connection.

As one embodiment, the radio protocol architecture in FIG. 3 is applicable to the first node in the present application.

As one embodiment, the radio protocol architecture in FIG. 3 is applicable to the second node in the present application.

As one embodiment, the first DCI in the present application is generated at the PHY301.

As one embodiment, the first PUSCH in the present application is generated at the PHY351.

As one embodiment, the target physical uplink channel in the present application is generated at the PHY351 or the PHY301.

### Embodiment 4

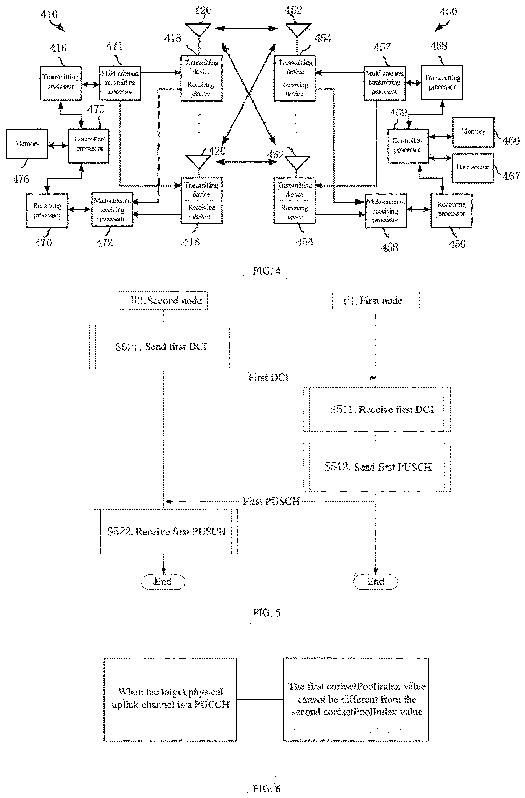

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, an upper layer data packet from a core network is provided to the controller/processor 475. The controller/processor 475 implements the functionality of the L2 layer. In the transmission from the first communication device 410 to the second communication device 450, the controller/processor 475 provides header compression, encryption, packet segmentation and reordering, multiplexing between logical and transport channels, and radio resource allocation to the second communication device 450 based on various priority metrics. The controller/processor 475 is also responsible for the retransmission of lost packets, and for the signaling to the second communication device 450. The transmitting processor 416 and the multi-antenna transmitting processor 471 implement various signal processing functions for the L1 layer (i.e., the physical layer). The transmitting processor 416 implements coding and interleaving to facilitate forward error correction (FEC) at the second communication device 450, as well as mapping of signal clusters based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding (comprising codebook-based precoding and non-codebook-based precoding) and beamforming processing on the coded and modulated symbols to generate one or more spatial streams. The transmitting processor 416 then maps each spatial stream to a subcarrier, multiplexes with a reference signal (for example, a pilot frequency) in the time domain and/or frequency domain, and subsequently uses an inverse fast Fourier transform (IFFT) to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the first communication device 410 to the second communication device 450, at the second communication device 450, each receiving device 454 receives a signal by a corresponding antenna 452 thereof. Each receiving device 454 recovers the information modulated onto the radio frequency carrier, and converts the radio frequency stream into a baseband multi-carrier symbol stream, which is then provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, the physical layer data signal and the reference signal are demultiplexed by the receiving processor 456, wherein the reference signal will be used for channel estimation, and the data signal is recovered after multi-antenna detection in the multi-antenna receiving processor 458 to obtain any spatial stream with the second communication device 450 as the destination. The symbols on each spatial stream are demodulated and recovered in the receiving processor 456, and a soft decision is generated. Subsequently, the receiving processor 456 decodes and deinterleaves the soft decision to recover upper layer data and control signals transmitted by the first communication device 410 on the physical channel. Subsequently, the upper layer data and the control signals are provided to the controller/processor 459. The controller/processor 459 implements the functions of the L2 layer. The controller/processor 459 may be associated with the memory 460 storing program codes and data. The memory 460 may be referred to as a computer-readable medium. In the transmission from the first communication device 410 to the second communication device 450, the controller/processor 459 provides demultiplexing between transport and logical channels, packet reassembly, decryption, header decompression, and control signal processing to recover the upper layer data packets from the core network. Subsequently, the upper layer data packets are provided to all protocol layers above the L2 layer. Various control signals may also be provided to the L3 for L3 processing.

In the transmission from the second communication device 450 to the first communication device 410, at the second communication device 450, the data source 467 is used for providing upper layer data packets to the controller/processor 459. The data source 467 represents all protocol layers above the L2 layer. Similar to the sending function at the first communication device 410 described in the transmission from the first communication device 410 to the second communication device 450, the controller/processor 459 implements header compression, encryption, packet segmentation and reordering, and multiplexing between logical and transport channels based on radio resource allocation, and implements L2 layer functions for the user plane and the control plane. The controller/processor 459 is also responsible for retransmission of lost packets, and for the signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Subsequently, the transmitting processor 468 modulates the generated spatial stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the receiving function at the second communication device 450 described in the transmission from the first communication device 410 to the second communication device 450. Each receiving device 418 receives a radio frequency signal through a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 storing program codes and data. The memory 476 may be referred to as a computer-readable medium. In the transmission from the second communication device 450 to the first communication device 410, the controller/processor 475 provides demultiplexing between transport and logical channels, packet reassembly, decryption, header decompression, and control signal processing to recover the upper layer data packets from the UE450. The upper layer data packets from the controller/processor 475 may be provided to the core network.

As one embodiment, the first node in the present application comprises the second communication device 450, and the second node in the present application comprises the first communication device 410.

As one sub-embodiment of the above embodiment, the first node is user equipment, and the second node is user equipment.

As one sub-embodiment of the above embodiment, the first node is user equipment, and the second node is a relay node.

As one sub-embodiment of the above embodiment, the first node is a relay node, and the second node is user equipment.

As one sub-embodiment of the above embodiment, the first node is user equipment, and the second node is a base station device.

As one sub-embodiment of the above embodiment, the first node is a relay node, and the second node is a base station device.

As one sub-embodiment of the above embodiment, the second node is user equipment, and the first node is a base station device.

As one sub-embodiment of the above embodiment, the second node is a relay node, and the first node is a base station device.

As one sub-embodiment of the above embodiment, the second communication device 450 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for error detection using an acknowledgement (ACK) and/or negative acknowledgement (NACK) protocol to support HARQ operations.

As one embodiment, the second communication device 450 comprises: at least one processor and at least one memory, wherein the at least one memory comprises a computer program code; and the at least one memory and the computer program codes are configured to be used together with the at least one processor. The second communication device 450 apparatus at least: receives first DCI, wherein the first DCI is used for triggering a target physical uplink channel, and the first DCI is associated with a first coresetPoolIndex value; and sends a first PUSCH, wherein the first PUSCH is associated with a second coresetPoolIndex value, and the first PUSCH overlaps with the target physical uplink channel, wherein whether the first coresetPoolIndex value can be different from the second coresetPoolIndex value is related to whether the target physical uplink channel is a PUCCH or a PUSCH.

As one sub-embodiment of the above embodiment, the second communication device 450 corresponds to the first node in the present application.

As one embodiment, the second communication device 450 comprises: a memory storing a computer-readable instruction program, wherein the computer-readable instruction program generates actions when executed by at least one processor, and the actions comprise: receiving first DCI, wherein the first DCI is used for triggering a target physical uplink channel, and the first DCI is associated with a first coresetPoolIndex value; and sending a first PUSCH, wherein the first PUSCH is associated with a second coresetPoolIndex value, and the first PUSCH overlaps with the target physical uplink channel, wherein whether the first coresetPoolIndex value can be different from the second coresetPoolIndex value is related to whether the target physical uplink channel is a PUCCH or a PUSCH.

As one sub-embodiment of the above embodiment, the second communication device 450 corresponds to the first node in the present application.

As one embodiment, the first communication device 410 comprises: at least one processor and at least one memory, wherein the at least one memory comprises a computer program code; and the at least one memory and the computer program codes are configured to be used together with the at least one processor. The first communication device 410 apparatus at least: sends first DCI, wherein the first DCI is used for triggering a target physical uplink channel, and the first DCI is associated with a first coresetPoolIndex value; and receives a first PUSCH, wherein the first PUSCH is associated with a second coresetPoolIndex value, and the first PUSCH overlaps with the target physical uplink channel, wherein whether the first coresetPoolIndex value can be different from the second coresetPoolIndex value is related to whether the target physical uplink channel is a PUCCH or a PUSCH.

As one sub-embodiment of the above embodiment, the first communication device 410 corresponds to the second node in the present application.

As one embodiment, the first communication device 410 comprises: a memory storing a computer-readable instruction program, wherein the computer-readable instruction program generates actions when executed by at least one processor, and the actions comprise: sending first DCI, wherein the first DCI is used for triggering a target physical uplink channel, and the first DCI is associated with a first coresetPoolIndex value; and receiving a first PUSCH, wherein the first PUSCH is associated with a second coresetPoolIndex value, and the first PUSCH overlaps with the target physical uplink channel, wherein whether the first coresetPoolIndex value can be different from the second coresetPoolIndex value is related to whether the target physical uplink channel is a PUCCH or a PUSCH.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first DCI in the present application.

As one embodiment, at least one of {the antenna 420, the transmitting device 418, the multi-antenna transmitting processor 471, the transmitting processor 416, the controller/processor 475, and the memory 476} is used for sending the first DCI.

As one embodiment, at least one of {the antenna 452, the transmitting device 454, the multi-antenna transmitting processor 458, the transmitting processor 468, the controller/processor 459, the memory 460, and the data source 467} is used for sending the first PUSCH in the present application.

As one embodiment, at least one of {the antenna 420, the receiving device 418, the multi-antenna receiving processor 472, the receiving processor 470, the controller/processor 475, and the memory 476} is used for receiving the first PUSCH in the present application.

As one embodiment, at least one of {the antenna 452, the transmitting device 454, the multi-antenna transmitting processor 458, the transmitting processor 468, the controller/processor 459, the memory 460, and the data source 467} is used for sending the target physical uplink channel in the present application.

As one embodiment, at least one of {the antenna 420, the receiving device 418, the multi-antenna receiving processor 472, the receiving processor 470, the controller/processor 475, and the memory 476} is used for receiving the target physical uplink channel in the present application.

### Embodiment 5

Embodiment 5 illustrates a flowchart of signal transmission according to one embodiment of the present application, as shown in FIG. 5. In FIG. 5, a first node U1 and a second node U2 are communicated via an air interface.

The first node U1 receives first DCI in step S511; and sends a first PUSCH in step S512.

The second node U2 sends first DCI in step S521; and receives a first PUSCH in step S522.

In Embodiment 5, the first DCI is used for triggering a target physical uplink channel, and the first DCI is associated with the first coresetPoolIndex value; the first PUSCH is associated with a second coresetPoolIndex value, and the first PUSCH overlaps with the target physical uplink channel, wherein whether the first coresetPoolIndex value can be different from the second coresetPoolIndex value is related to whether the target physical uplink channel is a PUCCH or a PUSCH; and when the target physical uplink channel is the PUSCH, the first coresetPoolIndex value can be different from the second coresetPoolIndex value.

As one sub-embodiment of Embodiment 5, when the target physical uplink channel is the PUCCH, the first coresetPoolIndex value cannot be different from the second coresetPoolIndex value.

As one sub-embodiment of Embodiment 5, when the target physical uplink channel is the PUCCH and the target physical uplink channel is reserved for UCI comprising HARQ-ACK information, the first coresetPoolIndex value cannot be different from the second coresetPoolIndex value.

As one sub-embodiment of Embodiment 5, ackNackFeedbackMode is configured as separate.

As one sub-embodiment of Embodiment 5, ackNackFeedbackMode is configured as joint.

As one embodiment, the first node U1 is the first node in the present application.

As one embodiment, the second node U2 is the second node in the present application.

As one embodiment, the first node U1 is one piece of UE.

As one embodiment, the first node U1 is one base station.

As one embodiment, the second node U2 is one base station.

As one embodiment, the second node U2 is one piece of UE.

As one embodiment, an air interface between the second node U2 and the first node U1 is a Uu interface.

As one embodiment, an air interface between the second node U2 and the first node U1 comprises a cellular link.

As one embodiment, an air interface between the second node U2 and the first node U1 comprises a wireless interface between a base station device and user equipment.

As one embodiment, an air interface between the second node U2 and the first node U1 comprises a wireless interface between a satellite device and user equipment.

As one embodiment, an air interface between the second node U2 and the first node U1 comprises a wireless interface between user equipment and user equipment.

As one embodiment, the problem to be solved by the present application comprises: how to reduce complexity of system design.

As one embodiment, the problem to be solved by the present application comprises: how to improve dispatching flexibility.

As one embodiment, the problem to be solved by the present application comprises: how to strike a balance between complexity of system design and scheduling flexibility.

As one embodiment, the problem to be solved by the present application comprises: how to improve the uplink transmission efficiency.

As one embodiment, the problem to be solved by the present application comprises: clarifying the relationship between the PUSCH and the PUCCH/PUSCH that overlap with each other.

As one embodiment, the problem to be solved by the present application comprises: clarifying the relationship between whether the first coresetPoolIndex value can be different from the second coresetPoolIndex value and whether the target physical uplink channel is the PUCCH or the PUSCH.

As one embodiment, the problem to be solved by the present application comprises: how to realize the enhancement of the relationship between physical uplink channels.

### Embodiment 6

Embodiment 6 illustrates a schematic diagram illustrating that a first coresetPoolIndex value cannot be different from a second coresetPoolIndex value according to one embodiment of the present application, as shown in FIG. 6.

In Embodiment 6, when the target physical uplink channel is a PUCCH, the first coresetPoolIndex value cannot be different from the second coresetPoolIndex value.

As one embodiment, the statement "the first coresetPoolIndex value cannot be different from the second coresetPoolIndex value" means: the case where the first coresetPoolIndex value is different from the second coresetPoolIndex value is not permitted.

As one embodiment, the statement "the first coresetPoolIndex value cannot be different from the second coresetPoolIndex value" means: the case where the first coresetPoolIndex value is different from the second coresetPoolIndex value is not expected.

As one embodiment, the statement "the first coresetPoolIndex value cannot be different from the second coresetPoolIndex value" means: the first node does not expect that the first coresetPoolIndex value is different from the second coresetPoolIndex value.

As one embodiment, the statement "the first coresetPoolIndex value cannot be different from the second coresetPoolIndex value" means: the case where the first coresetPoolIndex value is different from the second coresetPoolIndex value is not within the expectation of the first node.

As one embodiment, the statement "the first coresetPoolIndex value cannot be different from the second coresetPoolIndex value" means: the first coresetPoolIndex value is not different from the second coresetPoolIndex value.

As one embodiment, the statement "the first coresetPoolIndex value cannot be different from the second coresetPoolIndex value" means: the first coresetPoolIndex value is the same as the second coresetPoolIndex value.

As one embodiment, the statement "the first coresetPoolIndex value cannot be different from the second coresetPoolIndex value" means: the first node expects that the first coresetPoolIndex value is the same as the second coresetPoolIndex value.

As one embodiment, the statement "the first coresetPoolIndex value cannot be different from the second coresetPoolIndex value" means: the case where the first coresetPoolIndex value is the same as the second coresetPoolIndex value is expected.

### Embodiment 7

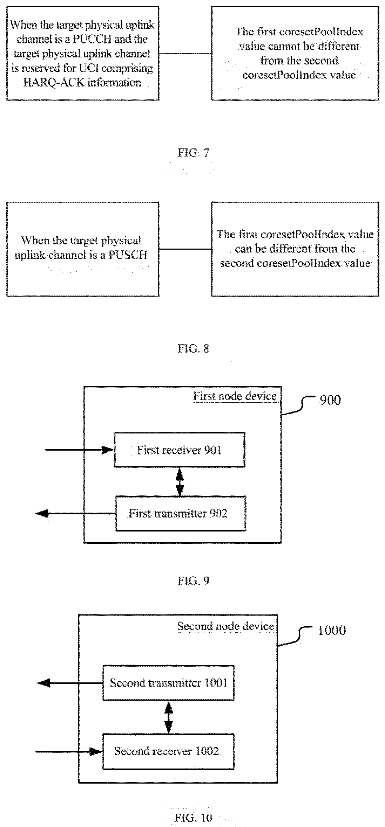

Embodiment 7 illustrates a schematic diagram illustrating that a first coresetPoolIndex value cannot be different from a second coresetPoolIndex value according to one embodiment of the present application, as shown in FIG. 7.

In Embodiment 7, when the target physical uplink channel is a PUCCH and the target physical uplink channel is reserved for UCI comprising HARQ-ACK information, the first coresetPoolIndex value cannot be different from the second coresetPoolIndex value.

As one embodiment, the statement "the target physical uplink channel is reserved for UCI comprising HARQ-ACK information" means: the first node would send UCI comprising HARQ-ACK information on the target physical uplink channel.

As one embodiment, the statement "the target physical uplink channel is reserved for UCI comprising HARQ-ACK information" means: the first node would multiplex UCI comprising HARQ-ACK information into the target physical uplink channel.

As one embodiment, the statement "the target physical uplink channel is reserved for UCI comprising HARQ-ACK information" means: the target physical uplink channel bears UCI comprising HARQ-ACK information.

As one embodiment, the statement "the target physical uplink channel is reserved for UCI comprising HARQ-ACK information" means: the target physical uplink channel is a PUCCH with UCI comprising HARQ-ACK information.

As one embodiment, the statement "the target physical uplink channel is reserved for UCI comprising HARQ-ACK information" means: the target physical uplink channel is a PUCCH determined to carry UCI comprising HARQ-ACK information before resolving overlap between a PUCCH and a PUSCH.

As one embodiment, when the target physical uplink channel is a PUCCH and the target physical uplink channel is reserved for UCI (Uplink Control Information) not comprising HARQ-ACK (Hybrid Automatic Repeat Request Acknowledgement) information, the first coresetPoolIndex value cannot be different from the second coresetPoolIndex value.

As one embodiment, when the target physical uplink channel is the PUCCH and the target physical uplink channel is reserved for UCI not comprising HARQ-ACK information, the first coresetPoolIndex value can be different from the second coresetPoolIndex value.

As one embodiment, when the target physical uplink channel is the PUCCH and the target physical uplink channel is reserved for UCI comprising an SR (Scheduling Request), the first coresetPoolIndex value cannot be different from the second coresetPoolIndex value.

As one embodiment, when the target physical uplink channel is the PUCCH and the target physical uplink channel is reserved for UCI comprising only CSI (Channel state information), the first coresetPoolIndex value cannot be different from the second coresetPoolIndex value.

As one embodiment, when the target physical uplink channel is the PUCCH and the target physical uplink channel is reserved for UCI comprising only CSI, the first coresetPoolIndex value can be different from the second coresetPoolIndex value.

As one embodiment, "the target physical uplink channel is reserved for given UCI" means: the first node would send the given UCI in the target physical uplink channel.

As one embodiment, "the target physical uplink channel is reserved for given UCI" means: the first node would multiplex the given UCI into the target physical uplink channel.

As one embodiment, "the target physical uplink channel is reserved for given UCI" means: the target physical uplink channel bears the given UCI.

As one embodiment, "the target physical uplink channel is reserved for given UCI" means: the target physical uplink channel is a PUCCH carrying the given UCI.

As one embodiment, "the target physical uplink channel is reserved for given UCI" means: the target physical uplink channel is a PUCCH determined to carry the given UCI before resolving overlap between a PUCCH and a PUSCH.

As one embodiment, the given UCI is UCI not comprising HARQ-ACK information.

As one embodiment, the given UCI is UCI comprising an SR.

As one embodiment, the given UCI is UCI only comprising CSI.

### Embodiment 8

Embodiment 8 illustrates a schematic diagram illustrating that a first coresetPoollndex value can be different from a second coresetPoolIndex value according to one embodiment of the present application, as shown in FIG. 8.

In Embodiment 8, when the target physical uplink channel is a PUSCH, the first coresetPoolIndex value can be different from the second coresetPoolIndex value.

As one embodiment, the statement "the first coresetPoolIndex value can be different from the second coresetPoolIndex value" means: the case where the first coresetPoolIndex value is different from the second coresetPoolIndex value is permitted.

As one embodiment, the statement "the first coresetPoolIndex value can be different from the second coresetPoolIndex value" means: the case where the first coresetPoolIndex value is different from the second coresetPoolIndex value is not expected.

As one embodiment, the statement "the first coresetPoolIndex value can be different from the second coresetPoolIndex value" means: the first node does not lack expectation that the first coresetPoolIndex value is different from the second coresetPoolIndex value.

As one embodiment, the statement "the first coresetPoolIndex value can be different from the second coresetPoolIndex value" means: the case where the first coresetPoolIndex value is different from the second coresetPoolIndex value is within the expectation of the first node.

As one embodiment, the statement "the first coresetPoolIndex value can be different from the second coresetPoolIndex value" means: the first coresetPoolIndex value is different from the second coresetPoolIndex value.

### Embodiment 9

Embodiment 9 illustrates a structural block diagram of a processing apparatus in one first node device, as shown in FIG. 9. In FIG. 9, the processing apparatus in the first node device 900 comprises a first receiver 901 and a first transmitter 902.

As one embodiment, the first node device 900 is a base station.

As one embodiment, the first node device 900 is user equipment.

As one embodiment, the first node device 900 is a relay node.

As one embodiment, the first node device 900 is a vehicular communication device.

As one embodiment, the first node device 900 is user equipment with a single panel.

As one embodiment, the first node device 900 is user equipment with multiple panels.

As one embodiment, the first receiver 901 comprises at least one of the antenna 452, the receiving device 454, the multi-antenna receiving processor 458, the receiving processor 456, the controller/processor 459, the memory 460, and the data source 467 in FIG. 4 of the present application.

As one embodiment, the first receiver 901 comprises at least the first five of the antenna 452, the receiving device 454, the multi-antenna receiving processor 458, the receiving processor 456, the controller/processor 459, the memory 460, and the data source 467 in FIG. 4 of the present application.

As one embodiment, the first receiver 901 comprises at least the first four of the antenna 452, the receiving device 454, the multi-antenna receiving processor 458, the receiving processor 456, the controller/processor 459, the memory 460, and the data source 467 in FIG. 4 of the present application.

As one embodiment, the first receiver 901 comprises at least the first three of the antenna 452, the receiving device 454, the multi-antenna receiving processor 458, the receiving processor 456, the controller/processor 459, the memory 460, and the data source 467 in FIG. 4 of the present application.

As one embodiment, the first receiver 901 comprises at least the first two of the antenna 452, the receiving device 454, the multi-antenna receiving processor 458, the receiving processor 456, the controller/processor 459, the memory 460, and the data source 467 in FIG. 4 of the present application.

As one embodiment, the first transmitter 902 comprises at least one of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 902 comprises at least the first five of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 902 comprises at least the first four of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 902 comprises at least the first three of the antenna 452, the transmitting device 454, the multi-antenna transmitting processor 457, the transmitting processor 468, the controller/processor 459, the memory 460, and the data source 467 in FIG. 4 of the present application.

As one embodiment, the first transmitter 902 comprises at least the first two of the antenna 452, the transmitting device 454, the multi-antenna transmitting processor 457, the transmitting processor 468, the controller/processor 459, the memory 460, and the data source 467 in FIG. 4 of the present application.

As one embodiment, the first receiver 901 receives first DCI, wherein the first DCI is used for triggering a target physical uplink channel, and the first DCI is associated with a first coresetPoolIndex value; and the first transmitter 902 sends a first PUSCH, wherein the first PUSCH is associated with a second coresetPoolIndex value, and the first PUSCH overlaps with the target physical uplink channel, wherein whether the first coresetPoolIndex value can be different from the second coresetPoolIndex value is related to whether the target physical uplink channel is a PUCCH or a PUSCH.

As one embodiment, when the target physical uplink channel is the PUCCH, the first coresetPoolIndex value cannot be different from the second coresetPoolIndex value.

As one embodiment, when the target physical uplink channel is the PUCCH and the target physical uplink channel is reserved for UCI comprising HARQ-ACK information, the first coresetPoolIndex value cannot be different from the second coresetPoolIndex value.

As one embodiment, when the target physical uplink channel is the PUSCH, the first coresetPoolIndex value can be different from the second coresetPoolIndex value.

As one embodiment, when the target physical uplink channel is the PUSCH, the first transmitter 902 sends the target physical uplink channel.

As one embodiment, when the target physical uplink channel is the PUCCH, the first transmitter 902 does not send the target physical uplink channel.

As one embodiment, HARQ-ACK information is multiplexed on the first PUSCH.

### Embodiment 10

Embodiment 10 illustrates a structural block diagram of a processing apparatus in one second node device according to one embodiment, as shown in FIG. 10. In FIG. 10, the processing apparatus in the second node device 1000 comprises a second transmitter 1001 and a second receiver 1002.

As one embodiment, the second node device 1000 is user equipment.

As one embodiment, the second node device 1000 is a base station.

As one embodiment, the second node device 1000 is a satellite device.

As one embodiment, the second node device 1000 is a relay node.

As one embodiment, the second node device 1000 is a vehicular communication device.

As one embodiment, the second node device 1000 is user equipment supporting a V2X communication.

As one embodiment, the second node device 1000 is a device supporting operations on a high-frequency spectrum.

As one embodiment, the second node device 1000 is a device supporting operations on a shared spectrum.

As one embodiment, the second node device 1000 is a device supporting an XR service.

As one embodiment, the second node device 1000 is one of a test apparatus, a test device, and a test instrument.

As one embodiment, the second transmitter 1001 comprises at least one of the antenna 420, the transmitting device 418, the multi-antenna transmitting processor 471, the transmitting processor 416, the controller/processor 475, and the memory 476 in FIG. 4 of the present application.

As one embodiment, the second transmitter 1001 comprises at least the first five of the antenna 420, the transmitting device 418, the multi-antenna transmitting processor 471, the transmitting processor 416, the controller/processor 475, and the memory 476 in FIG. 4 of the present application.

As one embodiment, the second transmitter 1001 comprises at least the first four of the antenna 420, the transmitting device 418, the multi-antenna transmitting processor 471, the transmitting processor 416, the controller/processor 475, and the memory 476 in FIG. 4 of the present application.

As one embodiment, the second transmitter 1001 comprises at least the first three of the antenna 420, the transmitting device 418, the multi-antenna transmitting processor 471, the transmitting processor 416, the controller/processor 475, and the memory 476 in FIG. 4 of the present application.

As one embodiment, the second transmitter 1001 comprises at least the first two of the antenna 420, the transmitting device 418, the multi-antenna transmitting processor 471, the transmitting processor 416, the controller/processor 475, and the memory 476 in FIG. 4 of the present application.

As one embodiment, the second receiver 1002 comprises at least one of the antenna 420, the receiving device 418, the multi-antenna receiving processor 472, the receiving processor 470, the controller/processor 475, and the memory 476 in FIG. 4 of the present application.

As one embodiment, the second receiver 1002 comprises at least the first five of the antenna 420, the receiving device 418, the multi-antenna receiving processor 472, the receiving processor 470, the controller/processor 475, and the memory 476 in FIG. 4 of the present application.

As one embodiment, the second receiver 1002 comprises at least the first four of the antenna 420, the receiving device 418, the multi-antenna receiving processor 472, the receiving processor 470, the controller/processor 475, and the memory 476 in FIG. 4 of the present application.

As one embodiment, the second receiver 1002 comprises at least the first three of the antenna 420, the receiving device 418, the multi-antenna receiving processor 472, the receiving processor 470, the controller/processor 475, and the memory 476 in FIG. 4 of the present application.

As one embodiment, the second receiver 1002 comprises at least the first two of the antenna 420, the receiving device 418, the multi-antenna receiving processor 472, the receiving processor 470, the controller/processor 475, and the memory 476 in FIG. 4 of the present application.

As one embodiment, the second transmitter 1001 sends first DCI, wherein the first DCI is used for triggering a target physical uplink channel, and the first DCI is associated with a first coresetPoolIndex value; and the second receiver 1002 receives first PUSCH, wherein the first PUSCH is associated with a second coresetPoolIndex value, and the first PUSCH overlaps with the target physical uplink channel; and wherein whether the first coresetPoolIndex value can be different from the second coresetPoolIndex value is related to whether the target physical uplink channel is a PUCCH or a PUSCH.

As one embodiment, when the target physical uplink channel is the PUCCH, the first coresetPoolIndex value cannot be different from the second coresetPoolIndex value.

As one embodiment, when the target physical uplink channel is the PUCCH and the target physical uplink channel is reserved for UCI comprising HARQ-ACK information, the first coresetPoolIndex value cannot be different from the second coresetPoolIndex value.

As one embodiment, when the target physical uplink channel is the PUSCH, the first coresetPoolIndex value can be different from the second coresetPoolIndex value.

As one embodiment, when the target physical uplink channel is the PUSCH, the second receiver 1002 receives the target physical uplink channel.

As one embodiment, when the target physical uplink channel is the PUCCH, the second receiver 1002 abandons receiving the target physical uplink channel.

As one embodiment, HARQ-ACK information is multiplexed on the first PUSCH.

Those skilled in the art can understand that all or part of the steps in the above methods can be completed by instructing the relevant hardware through a program, and the program can be stored in a computer-readable storage medium, such as a read-only memory, a hard disk or an optical disk. Optionally, all or part of the steps in the above embodiments can also be implemented using one or more integrated circuits. Correspondingly, each module unit in the above embodiments can be implemented in the form of hardware or in the form of a software function module. The present application is not limited to any specific form of combination of software and hardware. The first node device in the present application includes but is not limited to mobile phones, tablet computers, laptops, data cards, low power consumption devices, eMTC devices, NB-IoT devices, vehicular communication devices, aircrafts, airplanes, drones, remote-controlled aircrafts, and other wireless communication devices. The second node device in the present application includes but is not limited to mobile phones, tablet computers, laptops, data cards, low power consumption devices, eMTC devices, NB-IoT devices, vehicular communication devices, aircrafts, airplanes, drones, remote-controlled aircrafts, and other wireless communication devices. The user equipment (UE) or the terminal in the present application includes but is not limited to mobile phones, tablet computers, laptops, network cards, low power consumption devices, eMTC devices, NB-IoT devices, vehicular communication devices, aircrafts, airplanes, drones, remote-controlled aircrafts, and other wireless communication devices. The base station device or the base station or a network-side device in the present application includes but is not limited to MacroCellular base stations, Microcellular base stations, Femtocells, relay base stations, eNBs, gNBs, transmit/receive points (TRPs), GNSSs, relay satellites, satellite base stations, air base stations, test apparatuses, test devices, test instruments, and other devices.

Those skilled in the art should understand that the present invention can be implemented in other specified forms without departing from its core or basic features. Therefore, the embodiments disclosed at present should be regarded as descriptive rather than restrictive in any way. The scope of the invention is determined by the attached claims rather than the previous description, and all changes within the equivalent meaning and area are considered to be included therein.

## Claims

1. A first node used for wireless communication, comprising:
a first receiver receiving first DCI, wherein the first DCI is used for triggering a target physical uplink channel, and the first DCI is associated with a first coresetPoolIndex value; and
a first transmitter sending a first PUSCH, wherein the first PUSCH is associated with a second coresetPoolIndex value, and the first PUSCH overlaps with the target physical uplink channel;
wherein whether the first coresetPoolIndex value can be different from the second coresetPoolIndex value is related to whether the target physical uplink channel is a PUCCH or a PUSCH; and when the target physical uplink channel is the PUSCH, the first coresetPoolIndex value can be different from the second coresetPoolIndex value.

2. The first node according to claim 1, wherein when the target physical uplink channel is the PUCCH and the target physical uplink channel is reserved for UCI comprising HARQ-ACK information, the first coresetPoolIndex value cannot be different from the second coresetPoolIndex value.

3. The first node according to claim 1 or 2, wherein the first PUSCH is scheduled by one DCI format.

4. The first node according to any one of claims 1 to 3, wherein the statement "the first DCI is associated with a first coresetPoolIndex value" means: the first coresetPoolIndex value is a value of a coresetPoolIndex configured to a CORESET used for receiving the first DCI.

5. The first node according to any one of claims 1 to 4, wherein the statement "the first PUSCH is associated with a second coresetPoolIndex value" means: the second coresetPoolIndex value is a value of a coresetPoolIndex configured to a CORESET used for receiving DCI that schedules the first PUSCH.

6. The first node according to any one of claims 1 to 5, wherein ackNackFeedbackMode is configured as separate.

7. The first node according to any one of claims 1 to 6, wherein the first coresetPoollndex value is the value of the coresetPoolIndex, and the second coresetPoolIndex value is the value of the coresetPoolIndex.

8. The first node according to any one of claims 1 to 7, wherein the first DCI is detected in a PDCCH.

9. The first node according to any one of claims 1 to 8, wherein the first PUSCH and the target physical uplink channel are on the same serving cell.

10. The first node according to any one of claims 1 to 9, wherein the first node is configured with a higher layer parameter PDCCH-Config for an active BWP (Bandwidth part) of one serving cell, and the higher layer parameter PDCCH-Config comprises 2 different coresetPoolIndex values in a ControlResourceSet.

11. A second node used for wireless communication, comprising:
a second transmitter sending first DCI, wherein the first DCI is used for triggering a target physical uplink channel, and the first DCI is associated with a first coresetPoolIndex value; and
a second receiver receiving a first PUSCH, wherein the first PUSCH is associated with a second coresetPoolIndex value, and the first PUSCH overlaps with the target physical uplink channel;
wherein whether the first coresetPoolIndex value can be different from the second coresetPoolIndex value is related to whether the target physical uplink channel is a PUCCH or a PUSCH; and when the target physical uplink channel is the PUSCH, the first coresetPoollndex value can be different from the second coresetPoolIndex value.

12. The second node according to claim 11, wherein when the target physical uplink channel is a PUCCH and the target physical uplink channel is reserved for UCI comprising HARQ-ACK information, the first coresetPoolIndex value cannot be different from the second coresetPoollndex value.

13. The second node according to claim 11 or 12, wherein the first PUSCH is scheduled by one DCI format.

14. The second node according to any one of claims 11 to 13, wherein the statement "the first DCI is associated with a first coresetPoolIndex value" means: the first coresetPoolIndex value is a value of a coresetPoolIndex configured to a CORESET used for receiving the first DCI.

15. The second node according to any one of claims 11 to 14, wherein the statement "the first PUSCH is associated with a second coresetPoolIndex value" means: the second coresetPoolIndex value is a value of a coresetPoolIndex configured to a CORESET used for receiving DCI that schedules the first PUSCH.

16. The second node according to any one of claims 11 to 15, wherein ackNackFeedbackMode is configured as separate.

17. The second node according to any one of claims 11 to 16, wherein the first coresetPoolIndex value is the value of the coresetPoolIndex, and the second coresetPoolIndex value is the value of the coresetPoolIndex.

18. The second node according to any one of claims 11 to 17, wherein the first DCI comprises at least one field in one DCI format.

19. The second node according to any one of claims 11 to 18, wherein the first PUSCH and the target physical uplink channel are on the same serving cell.

20. The second node according to any one of claims 11 to 19, wherein when the target physical uplink channel is the PUSCH, the first DCI is used for scheduling the target physical uplink channel; and when the target physical uplink channel is the PUCCH, the first DCI is used for triggering the target physical uplink channel.

21. A method used in a first node for wireless communication, comprising:
receiving first DCI, wherein the first DCI is used for triggering a target physical uplink channel, and the first DCI is associated with a first coresetPoolIndex value; and
sending a first PUSCH, wherein the first PUSCH is associated with a second coresetPoolIndex value, and the first PUSCH overlaps with the target physical uplink channel;
wherein whether the first coresetPoolIndex value can be different from the second coresetPoolIndex value is related to whether the target physical uplink channel is a PUCCH or a PUSCH; and when the target physical uplink channel is the PUSCH, the first coresetPoollndex value can be different from the second coresetPoolIndex value.

22. The method in the first node according to claim 21, wherein when the target physical uplink channel is the PUCCH and the target physical uplink channel is reserved for UCI comprising HARQ-ACK information, the first coresetPoollndex value cannot be different from the second coresetPoolIndex value.

23. The method in the first node according to claim 21 or 22, wherein the first PUSCH is scheduled by one DCI format.

24. The method in the first node according to any one of claims 21 to 23, wherein the statement "the first DCI is associated with a first coresetPoolIndex value" means: the first coresetPoolIndex value is a value of a coresetPoolIndex configured to a CORESET used for receiving the first DCI.

25. The method in the first node according to any one of claims 21 to 24, wherein the statement "the first PUSCH is associated with a second coresetPoolIndex value" means: the second coresetPoolIndex value is a value of a coresetPoolIndex configured to a CORESET used for receiving DCI that schedules the first PUSCH.

26. The method in the first node according to any one of claims 21 to 25, wherein ackNackFeedbackMode is configured as separate.

27. The method in the first node according to any one of claims 21 to 26, wherein the first coresetPoolIndex value is the value of the coresetPoolIndex, and the second coresetPoollndex value is the value of the coresetPoolIndex.

28. The method in the first node according to any one of claims 21 to 27, wherein the first DCI is detected in a PDCCH.

29. The method in the first node according to any one of claims 21 to 28, wherein the first PUSCH and the target physical uplink channel are on the same serving cell.

30. The method in the first node according to any one of claims 21 to 29, wherein the first node is configured with a higher layer parameter PDCCH-Config for an active BWP (Bandwidth part) of one serving cell, and the higher layer parameter PDCCH-Config comprises 2 different coresetPoolIndex values in a ControlResourceSet.

31. A method used in a second node for wireless communication, comprising:
sending first DCI, wherein the first DCI is used for triggering a target physical uplink channel, and the first DCI is associated with a first coresetPoolIndex value; and
receiving a first PUSCH, wherein the first PUSCH is associated with a second coresetPoolIndex value, and the first PUSCH overlaps with the target physical uplink channel;
wherein whether the first coresetPoolIndex value can be different from the second coresetPoolIndex value is related to whether the target physical uplink channel is a PUCCH or a PUSCH; and when the target physical uplink channel is the PUSCH, the first coresetPoolIndex value can be different from the second coresetPoolIndex value.

32. The method in the second node according to claim 31, wherein when the target physical uplink channel is the PUCCH and the target physical uplink channel is reserved for UCI comprising HARQ-ACK information, the first coresetPoolIndex value cannot be different from the second coresetPoolIndex value.

33. The method in the second node according to claim 31 or 32, wherein the first PUSCH is scheduled by one DCI format.

34. The method in the second node according to any one of claims 31 to 33, wherein the statement "the first DCI is associated with a first coresetPoolIndex value" means: the first coresetPoolIndex value is a value of a coresetPoolIndex configured to a CORESET used for receiving the first DCI.

35. The method in the second node according to any one of claims 31 to 34, wherein the statement "the first PUSCH is associated with a second coresetPoolIndex value" means: the second coresetPoolIndex value is a value of a coresetPoolIndex configured to a CORESET used for receiving DCI that schedules the first PUSCH.

36. The method in the second node according to any one of claims 31 to 35, wherein ackNackFeedbackMode is configured as separate.

37. The method in the second node according to any one of claims 31 to 36, wherein the first coresetPoolIndex value is the value of the coresetPoolIndex, and the second coresetPoolIndex value is the value of the coresetPoolIndex.

38. The method in the second node according to any one of claims 31 to 37, wherein the first DCI comprises at least one field in one DCI format.

39. The method in the second node according to any one of claims 31 to 38, wherein the first PUSCH and the target physical uplink channel are on the same serving cell.

40. The method in the second node according to any one of claims 31 to 39, wherein when the target physical uplink channel is the PUSCH, the first DCI is used for scheduling the target physical uplink channel; and when the target physical uplink channel is the PUCCH, the first DCI is used for triggering the target physical uplink channel.
